# EUROPÄISCHE PATENTSCHRIFT

(11) **EP 0 569 779 B1**
(45) Veröffentlichungstag und Bekanntmachung des Hinweises auf die Patenterteilung: **22.07.1998**
(21) Anmeldenummer: 93106886.0
(22) Anmeldetag: 28.04.1993
(51) Int. Cl.: C09B 62/085, C09B 62/028, C09B 62/51

(54) **Reaktivfarbstoffe**
Reactive dyes
Colorants réactifs

(30) Priorität: 11.05.1992 DE 4215485
(43) Veröffentlichungstag der Anmeldung: 18.11.1993
(73) Patentinhaber: BAYER AG, 51368 Leverkusen (DE)
(72) Erfinder: Jäger, Horst, Dr., D-51375 Leverkusen (DE); Wunderlich, Klaus, Dr., W-5090 Leverkusen 1 (DE)

(56) Entgegenhaltungen:
- EP-A- 0 014 844
- EP-A- 0 426 618
- DE-A- 2 655 089

## Beschreibung

Die vorliegende Erfindung betrifft neue Reaktivfarbstoffe, ein Verfahren zu ihrer Herstellung und ihre Verwendung.

Reaktivfarbstoffe, die als Chromophor eine Azoverbindung von Naphthalinsulfonsäuren aufweisen, sind bereits bekannt aus EP-A-299 315, DE-A-1 644 208 und JP-A-61 171 770 sowie der DE-A-2 655 089.

Die vorliegende Erfindung betrifft Reaktivfarbstoffe, die in Form der freien Säure folgender Formel entsprechen 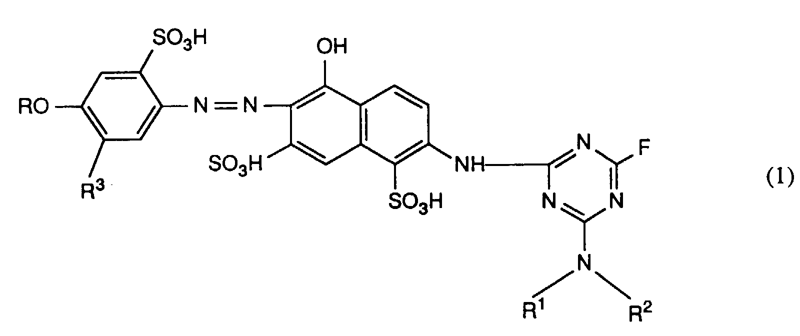 worin
- R =: CH₃ oder C₂H₅,
- R¹ =: Wasserstoff oder ein aliphatischer, cycloaliphatischer oder araliphatischer Rest,
- R² =: ein unter R¹ angegebener Rest oder ein Heteroarylrest oder ein Phenylrest, wobei die Reste R¹ und R² gegebenenfalls unter Einschluß eines weiteren Heteroatoms einen Ring bilden können,
- R³ =: H oder SO₃H.

Weitere Heteroatome zur Ringbildung von R² und R¹ sind bevorzugt O, NH, NCH₃, NCOCH₃, N-C₂H₄SO₂CH=CH₂, S, SO, SO₂.

Bevorzugte Heteroarylreste R² und R¹ sind 3-Aminosulfolan, 2-Aminothiazol, 6-Amino-2-ethylsulfonylbenzothiazol.

In einer bevorzugten Ausführungsform steht -NR¹R² für den Rest eines aliphatischen Amins oder eines heterocyclischen Amins, bei dem R¹ und R² zusammen mit dem gemeinsamen N-Atom einen Ring bilden.

Beispiele für Substituenten sind:
OH, Cl, F, COOH, SO₃H, OSO₃H, SO₂CH=CH₂, CN, SO₂CH₂CH₂Cl, SO₂CH₂CH₂OSO₃H, NR*-Z, wobei Z für eine heterocyclische Reaktivgruppe steht, insbesondere eine solche aus der Reihe der Monochlor- und der Monofluortriazinreihe oder der Fluorpyrimidinreihe.

Die cycloaliphatischen Reste R¹ sind insbesondere 5- oder 6-gliedrige Cycloalkylreste.

Die araliphatischen Reste R¹ sind insbesondere solche der Formel 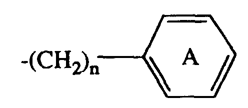 wobei n = 1-4 und der Rest A substituiert sein kann, beispielsweise durch Cl, NO₂, COOH, SO₃H, CH₃, OCH₃, SO₂CH₂CH₂OSO₃H, SO₂CH=CH₂, CH₂SO₂CH₂CH₂OSO₃H.

Beispiele für Substituenten der Phenylreste R² sind:
OCH₃, OC₂H₅, OCH₂CH₂OH, CH₃, C₂H₅, -CH(CH₃)₂, F, Cl, Br, COOH, SO₃H, NO₂, SO₂CH₂CH₂OSO₃H, SO₂CH=CH₂, CH₂SO₂CH₂CH₂OSO₃H, CH₂SO₂CH=CH₂, NHZ.

Im einzelnen sind für R¹ bzw. R² = aliphatischer Rest folgende Beispiele aufgeführt:
CH₃, C₂H₅, CH₂CH₂OH, CH₂CH₂OCH₃, CH₂CH₂OC₂H_{5,} CH₂CH₂OCH₂CH₂OH, CH₂SO₃H, CH₂CH₂SO₃H, CH₂CH₂OSO₃H, CH₂COOH, CH₂CH₂COOH, CH₂CH₂SO₂CH₂CH₂OSO₃H, CH₂CH₂OCH₂CH₂SO₂CH₂CH₂Cl, CH₂CH₂OCH₂CH₂SO₂CH=CH₂, CH₂CH₂NHCOCH₂CH₂COOH, CH₂CH₂CH₂SO₂CH₂CH₂OSO₃H, CH₂CH₂CH₂SO₂CH=CH₂, CH₂CH₂CH₂SO₂CH₂CH₂Cl,

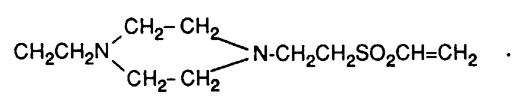

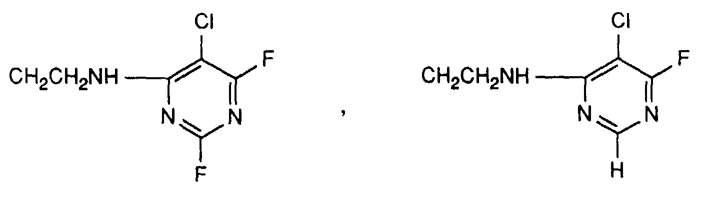

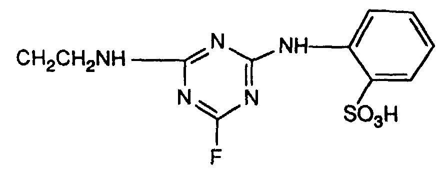

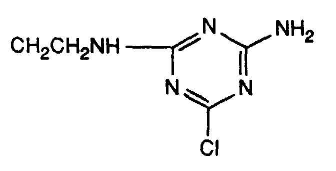

Beispiele für cycloaliphatische Reste R¹ bzw. R² sind:

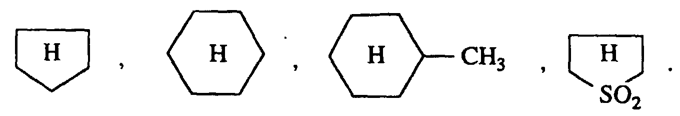

Araliphatische Reste R¹ sind beispielsweise

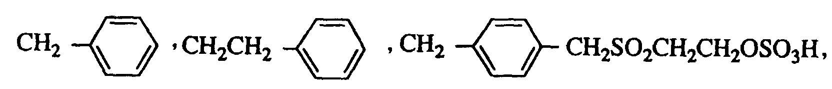

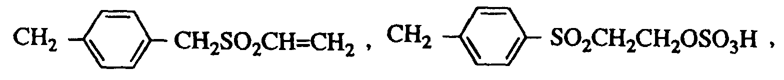

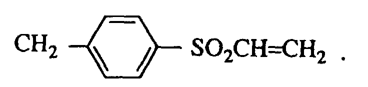

Als Beispiele für Phenylreste R² seien folgende aufgeführt:

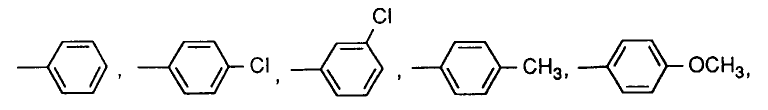

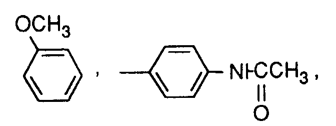

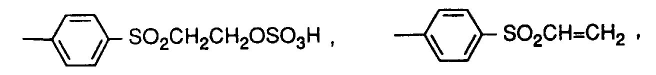

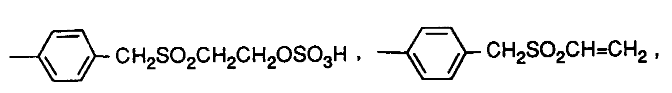

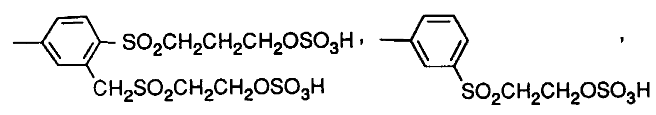

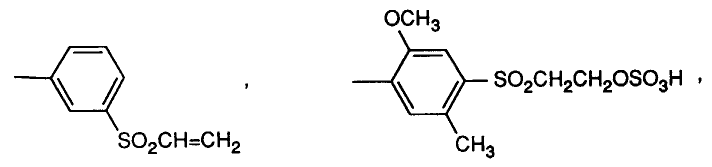

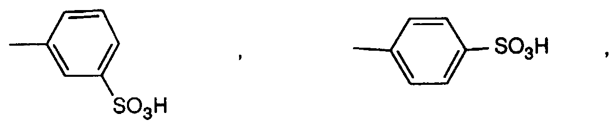

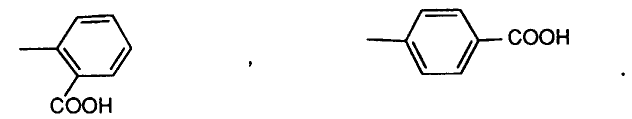

Beispiele für ringgeschlossene Reste 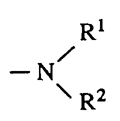 sind:

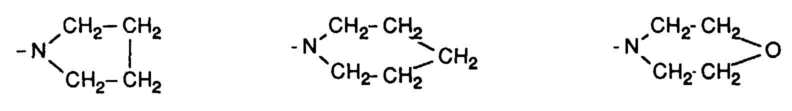

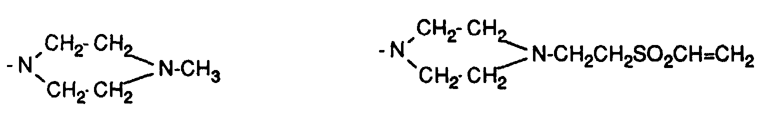

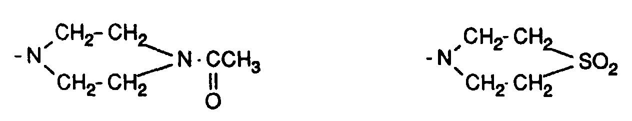

Bevorzugte Verbindungen im Rahmen der Formel (1) sind solche Verbindungen, in denen R³ für Wasserstoff steht.

Weiterhin bevorzugt sind solche Verbindungen, in denen R¹ und R² unabhängig voneinander Wasserstoff, C₁-C₄-Alkyl, das durch OCH₃, OC₂H₅, COOH, OSO₃H, SO₃H, OCH₂CH₂SO₂CH₂CH₂OSO₃H, OCH₂CH₂SO₂CH=CH₂, OCH₂CH₂SO₂CH₂CH₂Cl, SO₂CH₂CH₂OSO₃H, SO₂CH=CH₂ substituiert sein kann, bedeuten; in einer weiteren bevorzugten Ausführungsform bedeuten R¹ Wasserstoff oder C₁-C₄-Alkyl und R² einen Phenylrest, der durch Cl, OCH₃, CH₃, SO₃H, NO₂, COOH, CN, SO₂CH₂CH₂OSO₃H, SO₂CH=CH₂, CH₂SO₂CH₂CH₂OSO₃H, CH₂SO₂CH=CH₂ substituiert sein kann; in einer weiteren bevorzugten Ausführungsform steht

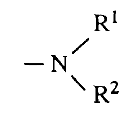

für den Rest eines ringeschlossenen Amins,
insbesondere für

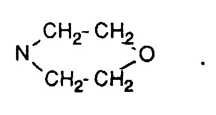

Gegenstand der Erfindung ist weiterhin ein Verfahren zur Herstellung der Farbstoffe der Formel (1), das dadurch gekennzeichnet ist, daß man zunächst 2-Amino-5-hydroxynaphthalin-1,7-disulfonsäure mit Trifluortriazin im pH-Bereich von 2-6, insbesondere 3-5 und bei Temperaturen von -5 bis +20°, insbesondere bei 0°-5°, gegebenenfalls in Gegenwart eines Puffers zu einer Difluortriazinverbindung kondensiert und anschließend ein weiteres Fluoratom durch einen Aminrest NR¹R² austauscht und schließlich die resultierende Monofluorverbindung der Formel 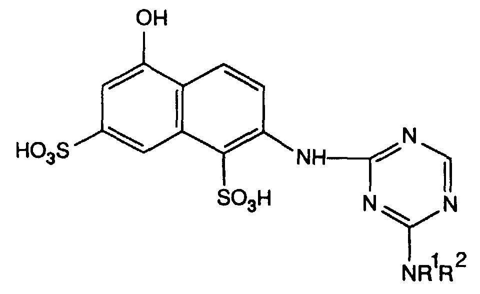 mit der Diazoverbindung eines Amins der Formel 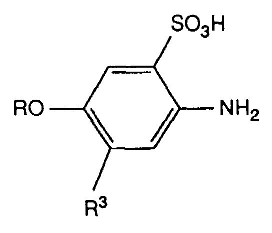 im neutralen Bereich kuppelt.
Als Puffer kommen insbesondere die Alkalisalze der Fluoride oder Phosphate infrage.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls durch Zugabe eines Puffer-Gemisches beispielsweise Mono- oder Dinatriumphosphat, getrocknet werden; vorzugsweise wird die Trocknung bei nicht hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d.h. ohne Zwischenisolierung der Farbstoffe herstellen.

Die neuen Farbstoffe eignen sich zum Färben und Bedrucken von hydroxyl- und amidgruppenhaltigen Materialien, insbesondere Cellulosematerialien. Sie zeichnen sich durch eine hohe Reaktivität und einen hohen Fixiergrad aus. Die mit diesen Farbstoffen erhältlichen Färbungen oder Drucke auf Cellulosematerialien zeichnen sich außerdem durch eine hohe Faser-Farbstoff-Bindungsstabilität sowie durch eine hervorragende Stabilität gegenüber Oxidationsmitteln, wie peroxyd- oder chlorhaltige Waschmittel, aus. Die Auswaschbarkeit der beim Färben oder Druck nur in geringerem Maße entstehenden Hydrolyseprodukte ist ausgezeichnet. Die Farbstoffe besitzen gute Naßechtheiten.

Die angegebenen Formeln sind die der freien Säuren. Bei der Herstellung werden im allgemeinen die Salze erhalten, insbesondere die Alkalisalze, wie Natrium, Kalium- oder Lithiumsalze.

Die in den Beispielen genannten Gewichte beziehen sich auf die freien Säuren. Die in den Beispielen genannten angegebenen Farbkennzahlen beziehen sich auf Color Index Hue Indication Chart (Indicator Numbers).

### Beispiel 1

31.9 g 2-Amino-5-hydroxy-naphthalin-1,7-disulfonsäure werden in 400 ml Wasser neutral gelöst. Man gibt dann 300 g Eis hinzu und läßt 8,8 ml Trifluortriazin einlaufen, wobei man mit 15 %iger Sodalösung einen pH von 4,04,5 einhält. Man rührt 5 Minuten nach gibt dann 8,7 g Morpholin hinzu und hält mit 15 %iger Sodalösung einen pH von 7,5-8. Nach 10 Minuten bei 10°C ist die Reaktion beendet. Das Reaktionsprodukt der Formel 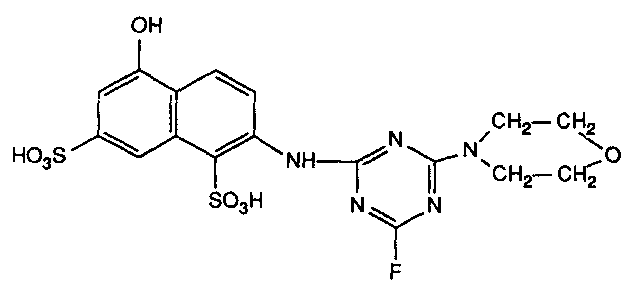 ist zum Teil ausgefallen.
Diese Suspension wird bei 5-10° mit einer auf üblichen Weg durch direkte Diazotierung von 20,3 g 1-Amino-4-methoxy-benzol-2-sulfonsäure erhaltenen Diazoverbindung versetzt, wobei gleichzeitig der pH durch Einstreuen von Natriumhydrogencarbonat bei pH 7,0-7,5 gehalten wird. Nach beendeter Kupplung wird der Farbstoff der Formel 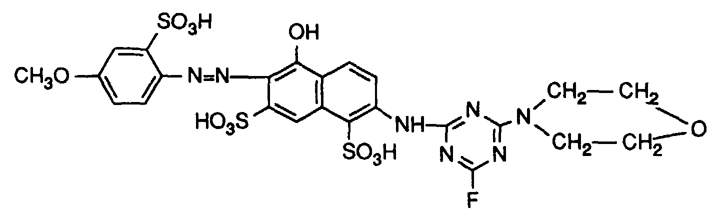 ausgesalzen, abgesaugt, getrocknet und gemahlen. Das rote Farbstoffpulver löst sich leicht in Wasser und färbt Baumwolle nach einem der für Reaktivfarbstoffe üblichen Verfahren in einem klaren Scharlach (Farbkennzahl 6).

Weitere wertvolle Farbstoffe, die Baumwolle in einem klaren Scharlach färben erhält man nach den Angaben von Beispiel 1, wenn man anstelle von Morpholin eine äquivalente Menge der nachfolgend aufgeführten Amine verwendet.

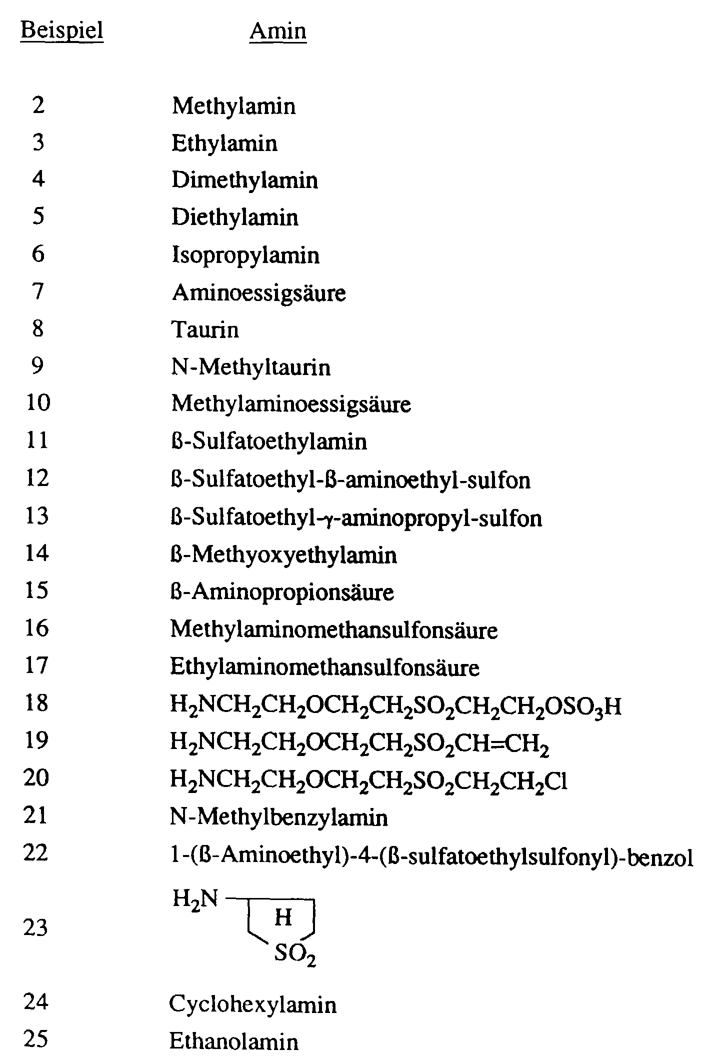

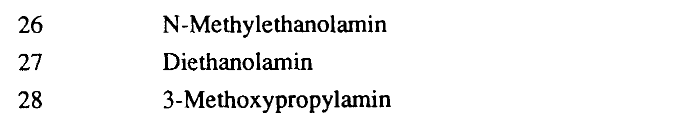

### Beispiel 29

31,9 g 2-Amino-5-hydroxy-naphthalin-1,7-disulfonsäure werden in 400 ml Wasser neutral gelöst. Man gibt dann 300 g Eis hinzu und läßt 8,8 ml Trifluortriazin einlaufen, wobei man mit 15 %iger Sodalösung einen pH von 4,0-4,5 einhält. Man Man rührt 5 Minuten nach und gibt dann eine neutrale Lösung von 17,3 g m-Sulfanilsäure zu und hält mit 15 %iger Sodalösung einen pH von 5,0-5,5. Während der Acylierung läßt man die Temperatur auf 15-20° ansteigen.
Die reusltierende Lösung des Reaktionsprodukt der Formel 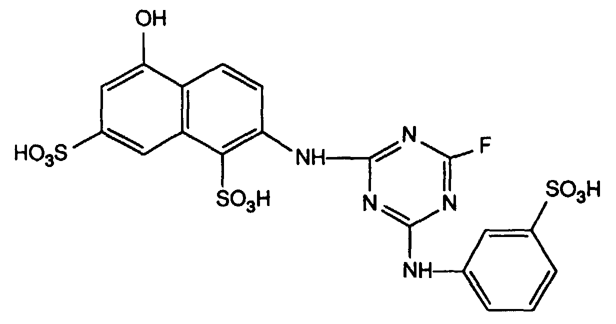 wird bei 5-10° mit einer auf üblichen Weg durch Diazotierung von 20,3 g 1-Amino-4-methoxy-benzol-2- sulfonsäure erhaltenen Diazoverbindung versetzt, wobei gleichzeitig der pH durch Einstreuen von Natriumhydrogencarbonat bei pH 7,0-7,5 gehalten wird. Nach beendeter Kupplung wird der Farbstoff der Formel 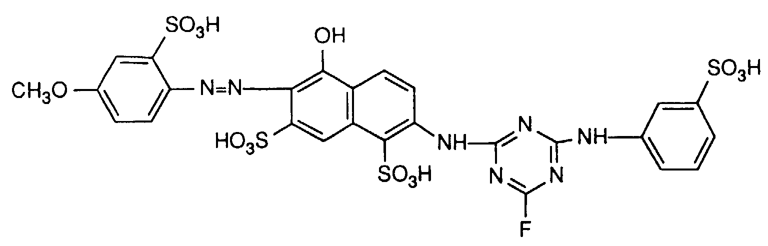 ausgesalzen, abgesaugt, getrocknet und gemahlen. Das rote Farbstoffpulver löst sich leicht in Wasser und färbt Baumwolle nach einem der für Reaktivfarbstoffe üblichen Verfahren in einem klaren Scharlach (Farbkennzahl 6).

Weitere wertvolle Farbstoffe, die Baumwolle in eine, klaren Scharlach färben, erhält man nach den Angaben von Beispiel 29, wenn man anstelle von m-Sulfanilsäure eine äquivalente Menge der nachfolgend aufgeführten Amine verwendet.

| Beispiel | Amin |
|---|---|
| 30 | Anilin |
| 31 | N-Ethylanilin |
| 32 | N-Methylanilin |
| 33 | 4-Chloranilin |
| 34 | 3-Chloranilin |
| 35 | 2-Chloranilin |
| 36 | o-Toluidin |
| 37 | p-Toluidin |
| 38 | p-Sulfanilsäure |
| 39 | o-Anisidin |
| 40 | p-Anisidin |
| 41 | 4-β-Sulfatoethylsulfonylanilin |
| 42 | 3-β-Sulfatoethylsulfonylanilin |
| 43 | β-Sulfatoethyl-4-aminobenzylsulfon |
| 44 | 3-Aminobenzoesäure |
| 45 | 4-Aminobenzoesäure |
| 46 | 1 -Amino-4-methyl-3-β-sulfatoethylsulfonyl-benzol |
| 47 | 1-Amino-4-vinylsulfonyl-benzol |
| 48 | 1-Amino-3-vinylsulfonyl-benzol |

### Beispiel 49

31,9 g 2-Amino-5-hydroxy-naphthalin-1,7-disulfonsäure werden nach den Angaben von Beispiel 1 mit Trifluortriazin und dann mit Morpholin kondensiert. Die resultierende Suspension der Monofluortriazinylverbindung wird bei 5-10° mit einer auf üblichen Weg durch direkt Diazotierung von 28,3 g 1-Amino4-methoxy-benzol-2,5-disulfonsäure erhaltenen Diazoverbindung versetzt, wobei gleichzeitig der pH durch Einstreuen von Natriumhydrogencarbonat bei 7,0-7,5 gehalten wird. Nach beendeteer Kupplung wird der Farbstoff der Formel 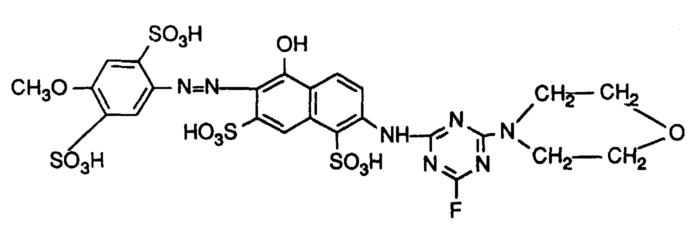 ausgesalzen, abgesaugt, getrocknet und gemahlen. Das rote Farbstoffpulver löst sich leicht in Wasser und färbt Baumwolle in einem brillantrotstichigen Orange (Farbkennzahl 5).

Verfährt man nach den Angaben dieses Beispiels, verwendet jedoch anstelle von Morpholin eine äquivalente Menge der in Beispiel 2-28 bzw. 2948 genannten Amine, wobei man für die zuletzt genannten aromatischen Amine bei der Kondensation mit der Difluortriazinverbindung einen pH von 5,0-5,5 einhält, so resultieren gleichfalls Reaktivfarbstoffe, die Baumwolle scharlach färben (Farbkennzahl 6).

### Beispiel 50

31,9 g 2-Amino-5-hydroxy-naphthalin-1,7-disulfonsäure werden nach den Angaben von Beispiel 1 mit Trifluortriazin kondensiert. Die Lösung der resultierenden Difluortriazinverbindung wird bei O° mit 5,0 g Ethylendiamin versetzt, wobei man einen pH von 5,5-6,5 einhält. Nach 2 bis 3 Stunden ist die Kondensation beendet. Das Reaktionsprodukt der Formel 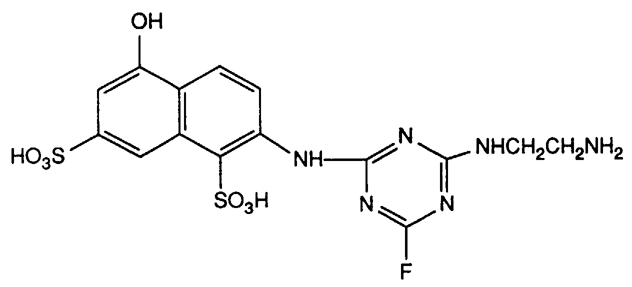 das weitgehend als Suspension vorliegt, wird mit einer auf üblichen Weg durch Diazotierung von 30,3 g 2-Amino-naphthalin-1,5-disulfonsäure erhaltenen Diazoverbindung versetzt, wobei gleichzeitig der pH durch Einstreuen von Natriumhydrogencarbonat bei pH 7,0-7,5 gehalten wird. Nach beendeter Kupplung wird der Farbstoff der Formel 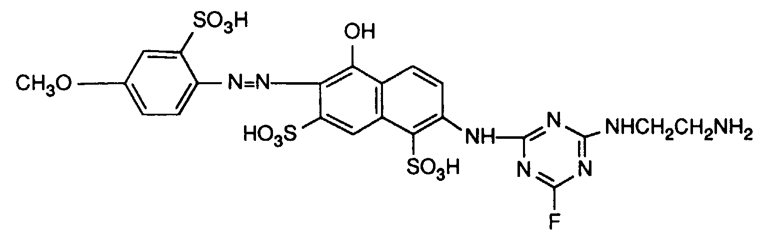 der sich schwer löslich abgeschieden hat, abgesaugt und erneut in 1 l Wasser angerührt. Bei 0-5° werden 16,9 g 2,4,6-Trifluor-5-chlor-pyrimidin zugetropft und dabei ein pH von 7,5-8,0 mit verdünnter Natronlauge eingehalten. Der Farbstoff geht während der Kondensation in Lösung. Nach beendeter Kondensation (Dünnschichtchromatogramm) wird der Farbstoff ausgesalzen, abgesaugt, getrocknet und gemahlen. Das rote Pulver löst sich leicht in Wasser und färbt Baumwolle in einem klaren Scharlach (Farbkennzahl 6).

Weitere wertvolle Reaktivfarbstoffe, die Baumwolle scharlach färben, erhält man nach den Angaben dieses Beispiels, wenn man anstelle von 2,4,6-Trifluor-5-chlor-pyrimidin eine äquivalente Menge des nachfolgend aufgeführten Reaktivkomponenten verwendet und bei der Kondensation im angegebenen Temperaturbereich arbeitet.

| Beispiel | Reaktivkomponente | Temperatur °C |
|---|---|---|
| 51 | 4,6-Difluor-5-chlor-pyrimidin | 10-15° |
| | | |
| 52 | 2,4-Dichlor-6-amino-triazin | 25-30° |
| | | |
| 53 | 2,4-Dichlor-6-(2-sulfophenylamino)-triazin | 25-30° |
| | | |
| 54 | 2,4-Dichlor-6-(2-sulfophenylamino)-triazin | 0-5° |
| | | |
| 55 | 2,4-Difluor-6-(2-chlor-5-sulfophenylamino)-triazin | 0-5° |
| | | |
| 56 | 2,4-Difluor-6-amino-triazin | 0-5° |

## Patentansprüche

1. Reaktivfarbstoffe, die in Form der freien Säure folgender Formel entsprechen 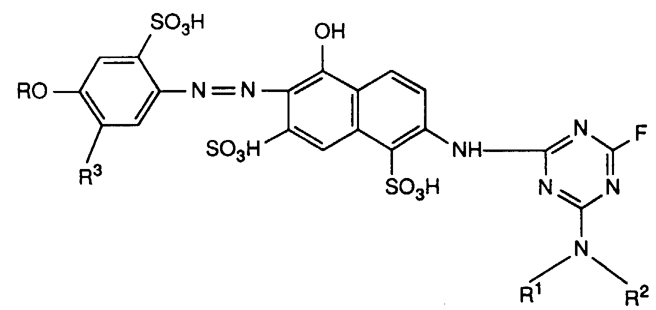 worin
R = CH₃ oder C₂H₅,
R¹ = Wasserstoff oder ein aliphatischer, cycloaliphatischer oder araliphatischer Rest,
R² = ein unter R¹ angegebener Rest oder ein Heteroarylrest oder ein Phenylrest,
wobei die Reste R¹ und R² gegebenenfalls unter Einschluß eines weiteren Heteroatoms einen Ring bilden können,
R³ = H oder SO₃H.

2. Reaktivfarbstoffe nach Anspruch 1, dadurch gekennzeichnet, daß
R = CH₃.

3. Reaktivfarbstoffe nach wenigstens einem der vorhergehenden Ansprüche, dadurch gekennzeichnet, daß R¹ und R² unabhängig voneinander Wasserstoff, C₁-C₄-Alkyl, das durch OCH₃, OC₂H₅, COOH, OSO₃H, SO₃H, OCH₂CH₂SO₂CH₂CH₂OSO₃H, OCH₂CH₂SO₂CH=CH₂, OCH₂CH₂SO₂CH₂CH₂Cl, SO₂CH₂CH₂OSO₃H, SO₂CH=CH₂ substituiert sein kann, bedeuten.

4. Reaktivfarbstoffe nach wenigstens einem der vorhergehenden Ansprüche, dadurch gekennzeichnet, daß R¹ Wasserstoff oder C₁-C₄-Alkyl und R² einen Phenylrest bedeuten, der durch Cl, OCH₃, CH₃, SO₃H, NO₂, COOH, CN, SO₂CH₂CH₂OSO₃H, SO₂CH=CH₂, CH₂SO₂CH₂CH₂OSO₃H, CH₂SO₂CH=CH₂ substituiert sein kann.

5. Reaktivfarbstoffe nach wenigstens einem der vorhergehenden Ansprüche, dadurch gekennzeichnet, daß R¹ und R² gegebenenfalls unter Einschluß eines weiteren Heteroatoms einen Ring bilden.

6. Reaktivfarbstoffe gemäß wenigstens einem der vorhergehenden Ansprüche, dadurch gekennzeichnet, daß wenigstens einer der Substituenten R¹ und R² einen Vinylsulfonreaktivrest enthält.

7. Reaktivfarbstoffe nach wenigstens einem der vorhergehenden Ansprüche, dadurch gekennzeichnet, daß R¹ eine heterocyclische Reaktivgruppe enthält.

8. Reaktivfarbstoff gemäß Anspruch 1 der Formel

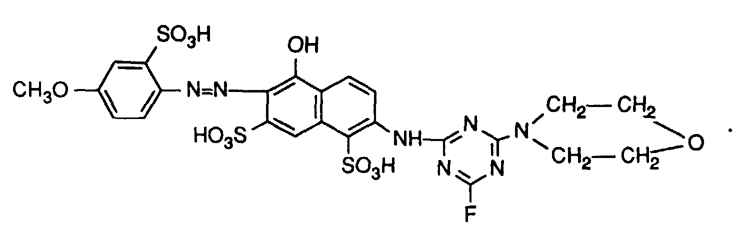

9. Verfahren zur Herstellung von Verbindungen der Formel (1) 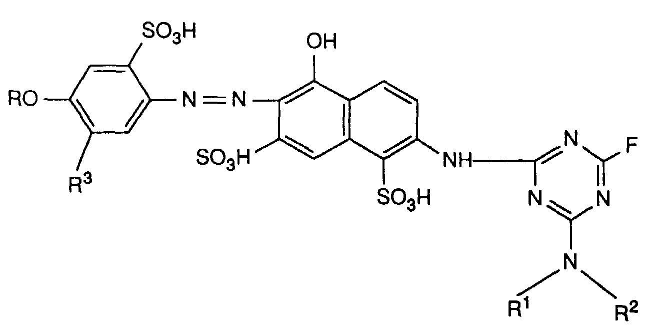 worin
R = CH₃ oder C₂H₅,
R¹ = Wasserstoff oder ein aliphatischer, cycloaliphatischer oder araliphatischer Rest,
R² = ein unter R¹ angegebener Rest oder ein Heteroarylrest oder ein Phenylrest,
wobei die Reste R¹ und R² gegebenenfalls unter Einschluß eines weiteren Heteroatoms einen Ring bilden können,
R³ = H oder SO₃H,
dadurch gekennzeichnet ist, daß man zunächst 2-Amino-5-hydroxynaphthalin-1,7-disulfonsäure mit Trifluortriazin im pH-Bereich von 2-6, und bei Temperaturen von -5 bis +20°, zu einer Difluortriazinverbindung kondensiert und anschließend ein weiteres Fluoratom durch einen Aminrest NR¹R² austauscht und schließlich die resultierende Monofluorverbindung mit der Diazoverbindung eines Amins der Formel 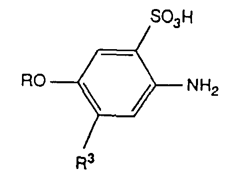 kuppelt.

10. Verfahren zum Färben oder Bedrucken von hydroxyl- oder amidgruppenhaltigen Materialien mit einem Reaktivfarbstoff, dadurch gekennzeichnet, daß ein Reaktivfarbstoff gemäß Anspruch 1 verwendet wird.

## Claims

1. Reactive dyestuffs which, in the form of the free acid, correspond to the following formula 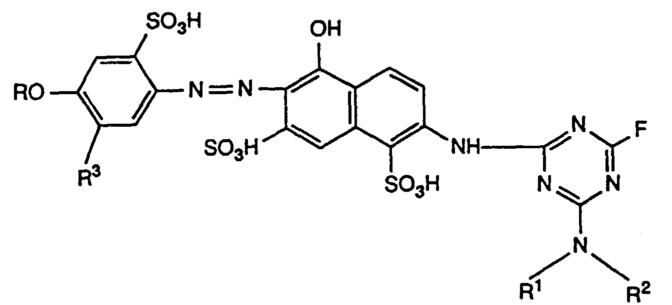 in which
R = CH₃ or C₂H₅,
R¹ = hydrogen or an aliphatic, cycloaliphatic or araliphatic radical,
R² = a radical given under R¹ or a heteroaryl radical or a phenyl radical,
wherein the radicals R¹ and R² can form a ring, if necessary with the inclusion of a further hetero atom,
R³ = H or SO₃H.

2. Reactive dyestuffs according to Claim 1, characterised in that
R = CH₃.

3. Reactive dyestuffs according to at least one of the preceding claims, characterised in that R¹ and R² independently of one another denote hydrogen or C₁-C₄-alkyl which can be substituted by OCH₃, OC₂H₅, COOH, OSO₃H, SO₃H, OCH₂CH₂SO₂CH₂CH₂OSO₃H, OCH₂CH₂SO₂CH=CH₂, OCH₂CH₂SO₂CH₂CH₂Cl, SO₂CH₂CH₂OSO₃H or SO₂CH=CH₂.

4. Reactive dyestuffs according to at least one of the preceding claims, characterised in that R¹ denotes hydrogen or C₁-C₄-alkyl and R² denotes a phenyl radical which can be substituted by Cl, OCH₃, CH₃, SO₃H, NO₂, COOH, CN, SO₂CH₂CH₂OSO₃H, SO₂CH=CH₂, CH₂SO₂CH₂OSO₃H or CH₂SO₂CH=CH₂.

5. Reactive dyestuffs according to at least one of the preceding claims, characterised in that R¹ and R², optionally including a further hetero atom, form a ring.

6. Reactive dyestuffs according to at least one of the preceding claims, characterised in that at least one of the substituents R¹ and R² contains a vinyl- sulphone reactive radical.

7. Reactive dyestuffs according to at least one of the preceding claims, characterised in that R¹ contains a heterocyclic reactive group.

8. Reactive dyestuff according to Claim 1, of the formula

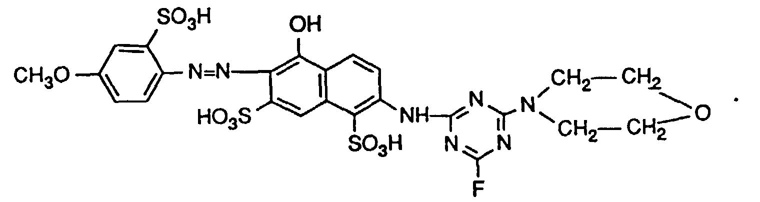

9. Process for the preparation of compounds of the formula (1) 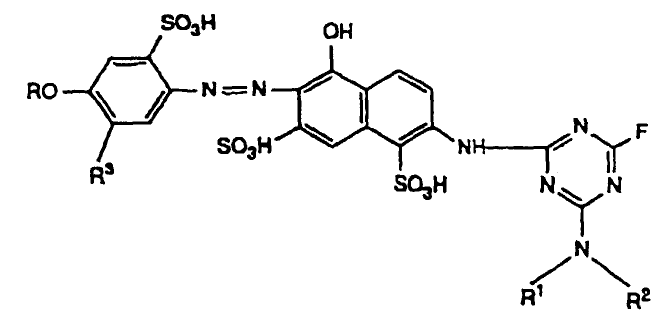 in which
R = CH₃ or C₂H₅,
R¹ = hydrogen or an aliphatic, cycloaliphatic or araliphatic radical,
R² = a radical given under R¹ or a heteroaryl radical or a phenyl radical,
wherein the radicals R¹ and R² can form a ring, if necessary with the inclusion of a further hetero atom,
R³ = H or SO₃H,
characterised in that 2-amino-5-hydroxy-naphthalene-1,7-disulphonic acid is first subjected to a condensation reaction with trifluorotriazine in the pH range of 2-6, and at temperatures of -5 to +20°, to give a difluorotriazine compound, a further fluorine atom is subsequently replaced by an amine radical NR¹R², and, finally, the resulting monofluoro compound is coupled with the diazo compound of an amine of the formula

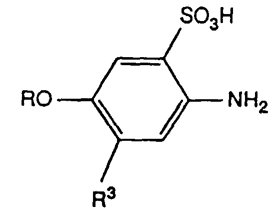

10. Process for dyeing or printing materials containing hydroxyl or amide groups with a reactive dyestuff, characterised in that a reactive dyestuff according to Claim 1 is used.

## Revendications

1. Colorants réactifs qui, sous forme de l'acide libre, correspondent à la formule suivante 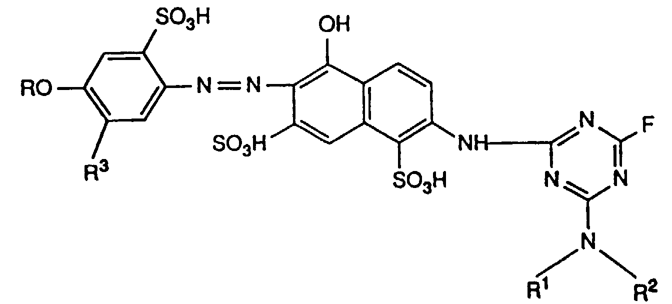 dans laquelle
R = CH₃ ou C₂H₅,
R¹ = un atome d'hydrogène ou un reste aliphatique, cycloaliphatique ou araliphatique,
R² = un des restes indiqués pour R¹ ou un reste hétéroaryle ou un reste phényle, les restes R¹ et R² pouvant former un cycle comprenant éventuellement un autre hétéroatome,
R³ = H ou SO₃H.

2. Colorants réactifs selon la revendication 1, caractérisés en ce que R = CH₃.

3. Colorants réactifs selon l'une au moins des revendications précédentes, caractérisés en ce que R¹ et R² représentent, indépendamment l'un de l'autre, un atome d'hydrogène ou un reste alkyle en C₁-C₄ pouvant être substitué par OCH₃, OC₂H₅, COOH, OSO₃H, SO₃H, OCH₂CH₂SO₂CH₂CH₂OSO₃H, OCH₂CH₂SO₂CH=CH₂, OCH₂CH₂SO₂CH₂CH₂Cl, SO₂CH₂CH₂OSO₃H, SO₂CH=CH₂.

4. Colorants réactifs selon l'une au moins des revendications précédentes, caractérisés en ce que R¹ représente un atome d'hydrogène ou un reste alkyle en C₁-C₄ et R² représente un reste phényle pouvant être substitué par Cl, OCH₃, CH₃, SO₃H, NO₂, COOH, CN, SO₂CH₂CH₂OSO₃H, SO₂CH=CH₂, CH₂SO₂CH₂CH₂OSO₃H, CH₂SO₂CH=CH₂.

5. Colorants réactifs selon l'une au moins des revendications précédentes, caractérisés en ce que R¹ et R² forment un cycle comprenant éventuellement un autre hétéroatome.

6. Colorants réactifs selon l'une au moins des revendications précédentes, caractérisés en ce qu'au moins l'un des substituants R¹ et R² contient un reste réactif de vinylsulfone.

7. Colorants réactifs selon l'une au moins des revendications précédentes, caractérisés en ce que R¹ contient un groupe réactif hétérocyclique.

8. Colorant réactif selon la revendication 1, de formule

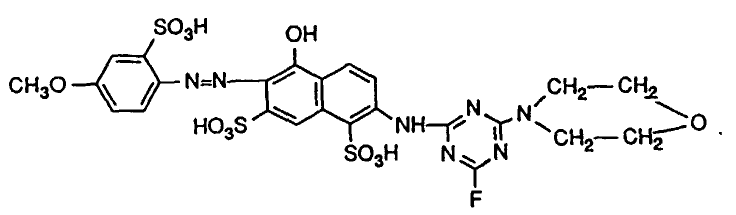

9. Procédé de préparation de composés de formule (1) 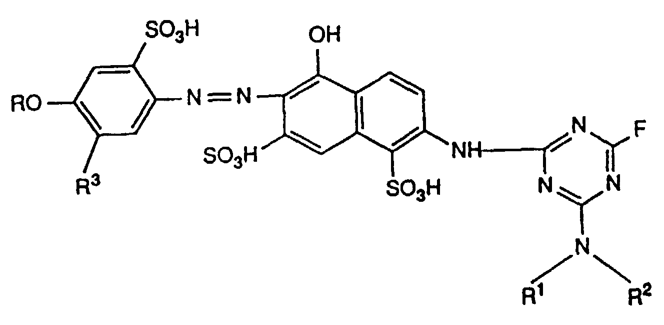 dans laquelle
R = CH₃ ou C₂H₅,
R¹ = un atome d'hydrogène ou un reste aliphatique, cycloaliphatique ou araliphatique,
R² = un des restes indiqués pour R¹ ou un reste hétéroaryle ou un reste phényle, les restes R¹ et R² pouvant former un cycle comprenant éventuellement un autre hétéroatome,
R³ = H ou SO₃H,
caractérisé en ce que l'on condense d'abord l'acide 2-amino-5-hydroxynaphtalène-1,7-disulfonique avec la trifluorotriazine à un pH compris entre 2 et 6 et à des températures comprises entre -5 et +20°C, pour obtenir un dérivé de difluorotriazine, puis on échange un autre atome de fluor contre un reste d'amine NR¹R², et on effectue finalement la copulation du composé monofluoré obtenu avec le dérivé diazoïque d'une amine de formule

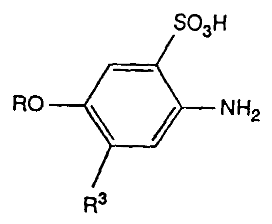

10. Procédé de teinture ou d'impression de matériaux contenant des groupes hydroxyle ou amide avec un colorant réactif, caractérisé en ce que l'on utilise un colorant réactif selon la revendication 1.
